# DEMANDE DE BREVET EUROPEEN

(11) **EP 0 617 074 A1**
(43) Date de publication de la demande: **28.09.1994**
(21) Numéro de dépôt: 94400618.8
(22) Date de dépôt: 23.03.1994
(51) Int. Cl.: C08J 9/00, A47L 13/17, A47K 7/03

(54) **Matériau alvéolaire cellulosique renfermant un agent biocide**

(30) Priorité: 24.03.1993 FR 9303377
(71) Demandeur: FINANCIERE ELYSEES BALZAC, F-75008 Paris (FR)
(72) Inventeur: Autant, Pierre, F-03600 Commentry (FR); Chalvin, Christophe, F-60000 Beauvais (FR); Colin, Claudine, F-42100 Saint Etienne (FR); Jorda, Rafael, F-69110 Sainte-Foy-les-Lyon (FR); Wertz, Jean-Luc, F-60000 Beauvais (FR)
(74) Mandataire: Le Roux, Martine

(57) **Abrégé**

La présente invention a pour objet un matériau alvéolaire cellulosique renfermant un agent biocide et un procédé pour sa préparation.

De façon caractéristique, des microparticules de type matriciel renfermant au moins un agent biocide sont réparties dans le réseau de cellulose dudit matériau et y assurent, en présence d'humidité ou d'eau, une libération contrôlée du(des)dit(s) agent(s) biocide(s).

## Description

La présente invention a pour objet un matériau alvéolaire cellulosique renfermant un agent biocide et un procédé pour sa préparation.

Elle se situe dans le domaine des éponges, toiles-éponges, éponges moussées et produits analogues destinés aux travaux de nettoyage et d'entretien ménager ou à l'hygiène corporelle et propose une amélioration de la résistance de ces produits à l'attaque des micro-organismes.

Selon l'invention, l'agent de protection - biocide(s) - est introduit au cours du procédé de fabrication du produit cellulosique sous forme de particules matricées ; la matrice desdites particules assurant une double fonction :
- la protection de l'agent actif lors de son introduction dans le produit cellulosique en phase de fabrication et lors des phases finales de fabrication de celui-ci (et la protection du milieu de fabrication dudit agent actif) ;
- la maîtrise de la vitesse de libération de l'agent actif au cours de l'utilisation du produit.

On a proposé, selon l'art antérieur, diverses méthodes de protection de produits cellulosiques ou d'outils d'entretien ménager contre l'attaque des micro-organismes et notamment :
- l'introduction, au cours de la fabrication du produit, d'un agent biocide dans le mélange réactif. Cette méthode, notamment décrite dans le brevet US-A-4 476 251 est particulièrement adaptée aux mousses synthétiques telles que les mousses polyuréthannes, obtenues par réticulation d'un mélange de différents polymères. Elle ne peut, en revanche, être transposée pour la fabrication de produits alvéolaires cellulosiques dans la mesure où l'agent actif, non protégé, serait irrémédiablement altéré ou perdu au cours de l'étape de régénération de la cellulose, étape particulièrement agressive. Le procédé de fabrication desdits produits alvéolaires cellulosiques, dit procédé viscose, notamment décrit dans le brevet FR-A-812 502 comprend la préparation d'une masse pâteuse à partir notamment d'une solution cellulosique, telle que de la viscose, de matières fibreuses, de pigments et d'agents porophores ; la mise en forme de cette masse par notamment, moulage ou enduction de part et d'autre ou d'un seul côté d'une grille, ou dépôt sur une bande porteuse ; le chauffage de celle-ci éventuellement dans un milieu adéquat pour que s'exerce l'action desdits agents porophores et que soit régénérée la cellulose. Cette dernière étape est particulièrement agressive. Elle peut être mise en oeuvre soit en faisant passer un courant électrique alternatif entre des électrodes en contact avec la pâte, soit en mettant ladite pâte en contact avec un milieu acide (pH voisin de 0), à des températures voisines de 70°C pendant quelques minutes (régénération dite acide pour la fabrication de toile-éponge), soit en mettant ladite pâte en contact avec un milieu basique (pH voisin de 12), à des températures voisines de 100°C pendant quelques heures (régénération dite basique pour la fabrication d'éponges). Quelle que soit sa variante de réalisation, ladite étape dans le procédé de fabrication de produits alvéolaires cellulosiques exclut l'introduction de l'agent actif non protégé ;
- l'introduction, au cours de la fabrication du produit, d'un polymère susceptible de fixer un agent biocide, ledit agent biocide étant lui, introduit en fin du procédé de fabrication. Cette méthode, notamment décrite dans la demande de brevet WO 85/02422, est adaptée aux produits en cellulose régénérée. Néanmoins, elle impose le choix de l'iode, à titre d'agent actif, qui implique notamment une coloration incompatible avec l'application présentement envisagée ;
- l'introduction, après fabrication du produit cellulosique, d'un agent biocide. Ledit agent est fixé dans le réseau de cellulose, soit par précipitation - cette technique est illustrée dans les brevets US-A-3 018 192, FR-A-1 200 663 et FR-A-1 345 614 - soit par un latex - cette technique est illustrée dans le brevet US-A-2 257 911 - soit par une technique associant précipitation et liage - cette dernière technique est illustrée dans la demande EP-A-0 358 572 -. Les différentes variantes de cette méthode sont adaptées aux produits alvéolaires cellulosiques. Toutefois, elles imposent, pour celles d'entre elles basées sur la précipitation l'utilisation de biocides susceptibles de présenter une charge ionique et, pour l'ensemble d'entre elles, des post-traitements qui peuvent être coûteux ;
- l'introduction d'un agent actif ou d'un système à libération contrôlée d'un agent actif entre les différentes parties constitutives du produit final : dans une cavité - ceci est illustré dans la demande EP-A-0 314 340 - au niveau d'un joint de colle - ceci est illustré dans la demande EP-A-0 500 460 -. Cette méthode n'est applicable qu'aux produits combinés et aux tampons. On notera de plus que la méthode décrite dans la demande EP-A-0 314 340 permet difficilement d'assurer une libération du principe actif adaptée au besoin dans la mesure où ledit principe actif est libéré sous l'action de la pression exercée par le manipulateur.

On propose présentement, à cette même fin de protection des matériaux alvéolaires cellulosiques contre les micro-organismes, une méthode originale.

Les matériaux alvéolaires cellulosiques de l'invention renferment dans leur réseau de cellulose des microparticules de type matriciel qui contiennent au moins un agent biocide et qui sont susceptibles, en présence d'humidité ou d'eau, de libérer de façon contrôlée le(s)dit(s) agent(s) biocide(s).

De façon caractéristique, on trouve dans les matériaux alvéolaires cellulosiques de l'invention des microparticules, piégées dans le réseau de cellulose.

Lesdites microparticules sont de type matriciel et non pas de type réservoir. Elles renferment au moins un biocide au sein d'une matrice.

Ladite matrice a pour première fonction de protéger le(s)dit(s) biocide(s) lors de l'incorporation des microparticules dans le matériau alvéolaire cellulosique en cours d'élaboration et lors des phases finales d'élaboration de celui-ci. Lesdites microparticules sont obligatoirement introduites avant la phase de régénération de la cellulose pour se trouver réparties dans le réseau de cellulose du produit fini.

Ladite matrice a pour seconde fonction de permettre, en présence d'humidité ou d'eau, une libération contrôlée du(des)dit(s) biocide(s). Cette libération est contrôlée, programmée en quantité de biocide relarguée dans le temps. Cette quantité est optimisée pour assurer la préservation du matériau alvéolaire cellulosique des micro-organismes pendant sa durée d'utilisation.

Ladite matrice doit être capable à la fois de résister à des conditions physico-chimiques sévères (conditions de régénération de la cellulose, au cours de laquelle la solution de xanthate de cellulose (viscose) est convertie en cellulose insoluble : conditions sévères telles que définies ci-dessus) et de libérer, dans des conditions douces (conditions d'utilisation du matériau alvéolaire cellulosique), de façon contrôlée, le(ou les) biocide(s) qu'elle renferme.

Les microparticules, piégées dans le réseau de cellulose des matériaux alvéolaires cellulosiques de l'invention, se présentent généralement sous la forme de sphères dont le diamètre est compris entre 0,05 et 2 mm, de préférence entre 0,1 et 1 mm. La granulométrie desdites microparticules est un paramètre important qui influe sur la cinétique de libération du principe actif.

Lesdites microparticules peuvent également se présenter sous d'autres formes, qui résultent de leur procédé de fabrication, et notamment sous la forme d'écailles.

Elles interviennent, comme indiqué ci-dessus, pour assurer la préservation du matériau alvéolaire cellulosique pendant sa durée d'utilisation, utilisation dans des conditions toujours plus ou moins humides ou en présence de quantités plus ou moins importantes d'eau.

En général, ledit matériau en contient de 0,1 à 10 % en poids, par rapport au poids de cellulose sèche. Avantageusement, il en contient de 0,5 à 2 % en poids, par rapport au poids de cellulose sèche. Il convient de veiller à ne pas modifier de façon significative les caractéristiques finales du matériau cellulosique (capacité d'absorption, résistance mécanique...) en introduisant lesdites microparticules dans sa structure.

On choisit les constituants desdites microparticules (principe(s) actif(s) et constituant(s) de la matrice) pour que celles-ci assurent leur double fonction de protection du biocide et de libération dudit biocide, telle que définie ci-dessus.

Avantageusement, le(s)dit(s) agent(s) biocide(s) est (sont) un (des) composé(s) qui présente(nt) une solubilité dans l'eau à température ambiante inférieure à 500 mg/l et qui est (sont) actif(s) à de faibles concentrations, et la matrice au sein de laquelle est (sont) dispersé(s) le(s)dit(s) agent(s) biocide(s) est à base d'un ou plusieurs constituant(s) hydrophobe(s) fusible(s), sélectionné(s) pour conférer auxdites microparticules peu de sensibilité aux pH et aux solvants organiques ainsi qu'une stabilité jusqu'à des températures de l'ordre de 95-120°C et pour permettre la libération contrôlée du(des)dit(s) agent(s) biocide(s) en milieu humide.

Plus précisément, l'agent ou les agents biocide(s) intervenant est (sont) avantageusement :
- faiblement soluble(s) dans l'eau : la faible solubilité du principe actif permet d'introduire dans le système particulaire des proportions de principe actif supérieures au taux de percolation et de diminuer la quantité de système particulaire à introduire,
- actif(s) à de faibles concentrations : on comprend que l'on est, en pratique, limité quant à la quantité de principe actif à introduire dans le matériau cellulosique, c'est-à-dire quant à la quantité de microparticules à y introduire. On utilise avantageusement des biocides actifs à des concentrations de l'ordre de 0,1 % en poids par rapport au poids de cellulose sèche.

Avantageusement, l'agent (ou les agents) biocide(s) intervenant est (sont) un(des) composé(s) solide(s) à température ambiante. Il n'est toutefois nullement exclu d'utiliser un(ou des) agent(s) biocide(s) liquide(s) à température ambiante.

On indiquera, par ailleurs, que le(s)dit(s) agent(s) biocide(s) intervenant présente(nt) avantageusement une résistance thermique compatible avec les conditions d'incorporation des microparticules dans le matériau en cours d'élaboration. En tout état de cause, les microparticules (biocide(s) matricé(s) dans un ou plusieurs constituant(s) hydrophobe(s) fusible(s)) doivent être stables à des températures de l'ordre de 95-120°C.

A partir des précisions données ci-dessus, l'homme du métier est capable de sélectionner des principes actifs - biocides - convenant aux fins de la présente invention.

Conviennent notamment à ces fins :
- le 2-(1,3-thiazol-4-yl)benzimidazole (ou thiabendazole),
- le méthylbenzimidazol-2-yl carbamate (ou carbendazim),
- le 2,2'-dihydroxy-5,5'-dichlorodiphénylméthane (ou dichlorophène),
- le 2,4,4'-trichloro-2'-hydroxybiphényléther (ou triclosan),
- le 1-[[2-(2,4-dichlorophényl)-1,3-dioxalan-2-yl]méthyl]-1H-1,2,4-triazole (ou azaconazole), et
- leurs mélanges.

Cette liste n'est nullement exhaustive.

Plus précisément, la matrice au sein de laquelle est (sont) dispersé(s) le(s)dit(s) agent(s) biocide(s) est à base d'un ou plusieurs constituant(s) hydrophobe(s) fusible(s). L'hydrophobie requise pour lesdits matériaux se conçoit aisément. Leur caractère fusible est exigé pour permettre la fabrication des microparticules à des températures raisonnables. On choisit avantageusement des matériaux dont la température de fusion est inférieure ou égale à 150°C. Ladite température de fusion doit toutefois être supérieure aux températures auxquelles doivent résister lesdites microparticules. Elle est avantageusement comprise entre 120 et 150°C.

Comme indiqué plus avant dans le présent texte, ladite matrice doit, autant que faire se peut, isoler et protéger le principe actif du milieu dans lequel on l'introduit pour son incorporation au cours de la fabrication du matériau cellulosique (et de même isoler et protéger dudit principe actif ledit milieu) tout en en autorisant une libération contrôlée en milieu humide ou en présence d'eau. Les constituants de ladite matrice doivent être choisis pour conférer aux microparticules :
- une relative inertie aux pH des milieux de fabrication des matériaux alvéolaires cellulosiques - lesdits pH pouvant, selon le procédé de régénération mis en oeuvre, avoir des valeurs aussi différentes que 0-1 (régénération acide) ou 11-13 (régénération basique) - et aux solvants organiques qu'ils peuvent contenir - sulfure de carbone (CS₂) généralement - ;
- une stabilité thermique, jusqu'à des températures de l'ordre de 95-120°C.

Ladite matrice présente avantageusement une température de fusion supérieure à 95°C ; une résistance à pH 14 à 60°C pendant au moins 15 min ; une résistance à pH 1 à 70°C pendant au moins 15 min ; une résistance à l'action du disulfure de carbone pendant au moins 15 min ; la résistance étant définie comme la limitation de la libération dans le milieu d'essai du ou des biocide(s), en une quantité n'excédant pas 50 % en poids, préférablement 15 % en poids de la quantité de biocide(s), initialement présente.

A partir des précisions données ci-dessus, l'homme du métier est capable de sélectionner le ou les constituant(s) de base de ladite matrice.

Avantageusement, lesdits constituants de base présentent une température de fusion supérieure à 100°C et sont choisis parmi :
- les cires microcristallines ;
- les hydrocarbures saturés à chaîne linéaire de poids moléculaire compris entre 500 et 3 000 ;
- les cires de polyéthylène, de poids moléculaire compris entre 500 et 3000 ;
- les amides d'acides gras à chaîne linéaire et notamment le stéaramide ;
- l'éthylène bistéaramide ; et
- leurs mélanges.

Outre lesdits constituants de base et l'agent ou les agents biocide(s) qu'elle contient, la matrice peut également renfermer un ou plusieurs additifs du type agents de compatibilisation, de plastification, tensioactifs... Elle peut également renfermer, selon une variante de l'invention un ou des colorant(s) ou d'autres additifs susceptibles de modifier l'apparence des microparticules.

On fait avantageusement intervenir en son sein, pour augmenter son hydrophilie, au moins un agent tensioactif non ionique lipophile éventuellement polyoxyéthyléné : présentant de 0 à 40 motifs oxyde d'éthylène par molécule. De tels agents tensioactifs peuvent intervenir jusqu'à représenter 30 % en poids des microparticules de l'invention. Selon une variante préférée, ils interviennent jusqu'à 15 % en poids. Ils consistent avantageusement en des alcools gras polyoxyéthylénés qui présentent une chaîne carbonée linéaire comportant de 10 à 100 atomes de carbone et de 2 à 40 motifs oxyde d'éthylène par molécule.

En faisant intervenir plusieurs desdits agents tensioactifs, on peut observer un effet de synergie sur le résultat attendu.

En modifiant ainsi la composition de la matrice, on influe notamment sur la cinétique de libération du ou des biocides contenu(s) dans ladite matrice.

Un agent tensioactif du type précisé ci-dessus ou un mélange de tels agents intervient avantageusement en combinaison avec au moins un hydrocarbure saturé à chaîne linéaire pour l'élaboration de microparticules utiles aux fins de l'invention.

Lesdites microparticules contiennent généralement de 5 à 70 % en poids, avantageusement de 15 à 50 % en poids, de principe actif - biocide(s) - en leur sein.

Elles sont préparées par des techniques connues en elles-même, mises en oeuvre avec les principes actifs et constituants de la matrice adéquats. Lesdites techniques peuvent notamment consister en :
- les méthodes de dispersion en milieu liquide connues sous l'appellation de "meltable dispersions" ou "hot melt", selon lesquelles le mélange fondu ou la dispersion du principe actif dans la matrice fondue est dispersé dans un milieu liquide non solvant à une température supérieure à la température de solidification du système. La suspension est ensuite refroidie jusqu'à solidification du produit ;
- une extrusion à chaud suivie d'une granulation, selon la technique traditionnelle de fabrication des compounds de matières plastiques ;
- les méthodes par atomisation ou par prilling selon lesquelles le mélange fondu ou la dispersion du principe actif dans la matrice fondue est mis sous forme de gouttelettes de granulométrie désirée, par coulée à travers une buse éventuellement vibrée. Les gouttes sont alors soumises à un refroidissement spontané ou forcé, de façon telle qu'elles se solidifient pendant leur chute ;
- la méthode par écaillage (ou "flaking"), selon laquelle un cylindre refroidi est partiellement immergé dans un bain contenant le mélange ou la dispersion fondue. La rotation du cylindre permet de récupérer dans la zone froide un film de mélange solidifié, qui est granulé par broyage grossier et tamisage.

Toutes ces méthodes permettent la préparation de microparticules de type matriciel.

On notera incidemment ici que les microparticules de type matriciel, telles que décrites ci-dessus (à partir de la page 4, ligne 7) sont des produits nouveaux per se. Leur élaboration - choix des constituants - n'a pas été chose évidente.

Selon son deuxième objet, l'invention concerne un procédé pour la préparation de matériaux alvéolaires cellulosiques renfermant dans leur réseau de cellulose des microparticules de type matriciel, susceptibles, en présence d'humidité ou d'eau, de libérer de façon contrôlée, au moins un agent biocide qui agit au sein desdits matériaux alvéolaires cellulosiques.

Ledit procédé reprend les étapes du procédé viscose, telles que précisées ci-dessus ; à savoir :
- la préparation d'une masse pâteuse à partir notamment d'une solution cellulosique, telle que de la viscose, de matières fibreuses, de pigments et d'agents porophores ;
- la mise en forme de cette masse par notamment moulage, enduction de part et d'autre ou d'un seul côté d'une grille ou dépôt sur une bande porteuse ;
- le chauffage de celle-ci éventuellement dans un milieu adéquat pour que s'exerce l'action desdits agents porophores et que soit régénérée la cellulose.

On précise ici que la viscose - solution cellulosique - est obtenue par action d'une solution alcaline qui transforme la pâte de bois de base en alcali-cellulose, laquelle réagit avec du sulfure de carbone, pour former un xanthogénate de cellulose, soluble dans des solutions alcalines. On obtient ainsi une solution viscose à laquelle sont notamment ajoutées des matières fibreuses (telles que le coton ou le lin) pour augmenter la résistance du produit cellulosique fini.

La cellulose est régénérée à partir de la viscose dans les conditions sévères précisées au début du présent texte.

Les produits obtenus après régénération de la cellulose sont de façon classique rincés, éventuellement blanchis, séchés, plastifiés avant d'être découpés et emballés.

De façon caractéristique, dans le procédé de préparation des matériaux alvéolaires cellulosiques selon l'invention, on introduit dans la masse pâteuse (viscose + matières fibreuses + pigments + agents porophores...) avant son chauffage les microparticules de type matriciel renfermant au moins un agent biocide et assurant, en présence d'humidité ou d'eau une libération contrôlée du(des)dit(s) agent(s) biocide(s). C'est ainsi que l'on assure le piégeage desdites microparticules dans le réseau de cellulose du produit fini.

Selon une variante du procédé de l'invention, lesdites microparticules peuvent être introduites à de multiples stades de préparation de la viscose et de la pâte et, en particulier, lors de l'introduction des fibres de renforcement, ou lors de l'introduction des pigments ou lors de l'introduction des agents porophores. Selon cette variante, on obtient une répartition homogène des particules dans le produit cellulosique.

Selon une autre variante, dans le cas de produits obtenus par enduction de la pâte de part et d'autre d'une grille ou singalette, lesdites microparticules peuvent être déposées soit au niveau de ladite grille (de part et d'autre ou d'un seul côté de celle-ci) soit préalablement sur ladite grille. Selon cette variante, on obtient une répartition localisée des particules au niveau de la grille. Lesdites particules sont ainsi pratiquement imperceptibles par l'utilisateur.

L'invention est illustrée par les exemples ci-après. Des microparticules incorporées dans les matériaux alvéolaires cellulosiques selon l'invention ont notamment été élaborées par prilling avec les produits suivants :

### Biocides

. L'azaconazole = 1-[[2-(2,4-dichlorophényl)-1,3-dioxalan-2-yl]méthyl]-1H-1,2,4-triazole ; commercialisé par la société JANSSEN PHARMACEUTICA sous la marque RODEWOD®.
. Le dichlorophène = 2,2'-dihydroxy-5,5'-dichlorodiphénylméthane, commercialisé par la société BAYER sous la marque Préventol GD®
. Le carbendazim = méthylbenzimidazol-2-yl carbamate (MBC), commercialisé par la société INTACE sous la marque Carbendazim B300®.
. Le triclosan = 2,4,4'-trichloro-2'-hydroxybiphényléther ; commercialisé par la société CIBA GEIGY sous la marque Irgasan DP300®.
. Le thiabendazole = 2-(1,3-thiazol-4-yl)benzimidazole (TBZ) ; commercialisé par la société CIBA GEIGY.

### Constituants de la matrice

. Le stéaramide (C₁₇H₃₅-CONH₂), tel que par exemple UNIWAX®1750 commercialisé par UNICHEMA CHEMIE GmbH.
. PETROLITE® PE 1040 : cire de polyéthylène oxydée, commercialisée par PETROLITE Co.
. Polywax® 2000 : hydrocarbure saturé à chaîne linéaire, commercialisé par PETROLITE Co.
. EPOLENE® C10 : cire de polyéthylène, commercialisé par EASTMAN CHEMICAL PRODUCTS.
. UNITHOX® 550 : alcool polyoxyéthyléné, commercialisé par PETROLITE Co.
. UNITHOX® 480 : alcool polyoxyéthyléné, commercialisé par PETROLITE Co.
. MONTANOX® 85 : tensioactif (ester de sorbitane), commercialisé par la société SEPPIC.

Lesdites microparticules ont un diamètre compris entre 500 et 1 000 µm.

Pour évaluer la résistance à l'attaque des micro-organismes des matériaux alvéolaires cellulosiques de l'invention, la demanderesse a mis au point le test suivant, inspiré de la norme NF X 41-600.

Ledit test permet de vérifier l'efficacité du traitement fongicide. Il consiste principalement à soumettre des éprouvettes de produits cellulosiques à l'attaque de micro-organismes dans un récipient de culture et à déterminer par un examen visuel et un examen mécanique le degré de développement desdits micro-organismes, après un temps déterminé.

Le matériel utilisé est le suivant :
- Boîtes de Petri (diamètre 90 mm).
- Gélose de Sabouraud au chloramphénicol.
- Etuve ventilée comportant un hublot laissant pénétrer la lumière.
- Stérilisateur.
- Verrerie (fiole conique, pipette...).
- 9 souches de champignons cellulolitiques : Memnoniella echinata, Myrothecium verrucaria, Strachybotrys atra, Chaetomium globosum, Penicillium funiculosum, Trichoderma viride, Aspergillus amstelodami, Paecilomyces varioti, Aspergillus niger.

Ces souches ont été fournies par le Museum d'Histoire Naturelle- Laboratoire de Cryptogamie - Service de la mycothèque (12, rue Buffon 75005 Paris) -. Elles sont conservées au réfrigérateur et ont moins de trois mois.

Le test est réalisé dans les conditions ci-après :
- Température de l'étuve : 30°C
- % d'humidité relative dans l'étuve : 95 %
- Tous les outils, récipients et milieux sont stérilisés au préalable et on évite toute contamination par contact avec des objets non stériles.
- On travaille près de la flamme d'un bec Bunsen et sous une hotte, pour éviter toute contamination du milieu.
- Eprouvettes : on découpe dans le matériau cellulosique à tester des éprouvettes circulaires de diamètre 5,3 cm et d'épaisseur maximale 7 mm.

Le mode opératoire est le suivant :
- Préparation de la suspension de spores, au moment de l'emploi, selon la méthode suivante :
   - Stériliser 15 min à 120°C, 250 ml d'eau distillée contenus dans une fiole conique de 250 ml.
   - Verser 5 ml de solution refroidie dans chaque tube de culture. Racler soigneusement la surface du mycélium à l'aide du fil de tungstène d'un ensemenceur stérilisé.
   - Vider le contenu de chaque tube dans la fiole conique précédente au travers d'un entonnoir muni d'une gaze stérile ou d'un papier-filtre.
   - Agiter légèrement pour obtenir une suspension homogène.
- Préparation du milieu de culture :
   - Utilisation de la gélose de Sabouraud au chloramphénicol selon les instructions marquées sur l'emballage.
   - Après préparation et stérilisation de la gélose, la placer dans un bain thermostaté à 45°C.
   - Disperser 20 ml de la solution de spores dans 1 l de gélose à 45°C.
   - Mettre 20 ml de la solution ainsi obtenue, après homogénéisation, dans chaque boîte de Petri.
   - Laisser reposer les boîtes à température ambiante, le temps que le milieu se solidifie.
- Introduction des éprouvettes de produit cellulosique à tester et mise en culture :
   - Placer une éprouvette de produit cellulosique au milieu de chaque boîte de Petri.
   - Ne pas oublier de faire un témoin, une éprouvette exempte de fongicide.
   - Tous les échantillons doivent être au même taux d'humidité. Compléter avec de l'eau tamponnée stérile si nécessaire.
   - Placer les boîtes de Petri dans une étuve ventilée comportant un hublot pour laisser passer la lumière (mettre un cristallisoir rempli d'eau au fond de l'étuve pour assurer un taux d'humidité constant).
- Suivi de l'activité des souches pendant 3 semaines de culture :
   On exprime les résultats de ces tests (visuel et mécanique) comme indiqué ci-après.
   . On procède à un examen visuel de l'échantillon après 7, 14 et 21 jours de séjour dans l'étuve.
      On note, à chaque examen, le degré de résistance des échantillons, selon la cotation suivante :
      0 = pas de développement de moisissures visible à l'oeil nu. Il peut exister une auréole autour de l'échantillon à tester.
      1 = les souches sont juste au contact de l'échantillon, mais sans aucun développement sur celui-ci.
      2 = moins de 25 % de l'échantillon est recouvert par les souches.
      3 = moins de 50 % de l'échantillon est recouvert par les souches.
      4 = moins de 75 % de l'échantillon est recouvert par les souches.
      5 = la totalité de l'échantillon est recouvert par les souches.
      On compare la note de chaque échantillon avec celle du témoin. La cotation 3 au bout de trois semaines est acceptable si les témoins ont une cotation de 5.
   . On procède à un examen mécanique de l'échantillon après 21 jours de séjour dans l'étuve en évaluant la résistance mécanique de l'échantillon avec 2 pinces "brucelles" (grattage avec lesdites pinces).
      On note le degré de résistance des échantillons selon la cotation suivante :
      0 = l'échantillon n'a pas perdu sa résistance mécanique initiale. Présence d'une auréole autour de l'échantillon à tester.
      1 = l'échantillon n'a pas perdu sa résistance mécanique initiale.
      2 = moins de 25 % (en surface) de l'échantillon a perdu sa résistance mécanique initiale.
      3 = moins de 50 % (en surface) de l'échantillon a perdu sa résistance mécanique initiale.
      4 = moins de 75 % (en surface) de l'échantillon a perdu sa résistance mécanique initiale.
      5 = l'échantillon est totalement détruit.
      On compare la note de chaque échantillon avec celle du témoin. La cotation 2 après 3 semaines est acceptable si les témoins ont une cotation de 5.

### EXEMPLE 1

(Témoin (toile-éponge) sans biocide)

On réalise une toile-éponge suivant le procédé classique. Un mélange de viscose fibrée et de cristaux de sulfate de sodium est enduit de part et d'autre d'une grille ou d'une singalette, et le produit ainsi obtenu est régénéré dans un bain acide (mélange de sulfate de sodium et d'acide sulfurique), puis rincé.

Le produit obtenu présente les caractéristiques suivantes :
* Epaisseur : 6 mm
* Grammage (exprimé par rapport au poids de cellulose sèche) : 290 g/m².

Il est soumis au test décrit ci-dessus. On observe, après trois semaines, une destruction totale des échantillons (cotation 5).

### EXEMPLE 2

(Témoin, (toile-éponge) avec biocide, non matricé)

On réalise une toile-éponge de la façon suivante :
- on introduit dans un mélange de viscose fibrée et de cristaux de sulfate de sodium, 1 % en poids (par rapport au poids de cellulose sèche) d'azaconazole sous forme solide ;
- ce mélange est enduit de part et d'autre d'une grille ou d'une singalette ;
- le produit ainsi obtenu est régénéré dans un bain acide (mélange de sulfate de sodium et d'acide sulfurique) puis rincé.

On a mesuré la quantité de biocide éliminée dans les bains de régénération et de rinçage : 17 %.

Il reste donc 83 % du biocide initialement introduit dans la toile-éponge. Ladite toile présente les caractéristiques suivantes :
* Epaisseur : 6 mm
* Grammage (exprimé par rapport au poids de cellulose sèche) : 290 g/m².

Afin de simuler une utilisation ménagère, des échantillons de toile-éponge fabriqués selon le mode opératoire décrit ci-dessus sont soumis à un nombre variable de cycles machine à laver (modèle du commerce) (MAL) en présence ou en l'absence de produits détergents.

Ils sont ensuite soumis au test décrit ci-dessus. On obtient les résultats suivants.
Cotation visuelle :
- produit tel que : 1
- produit après un cycle MAL sans lessive : 4-5
- produit après un cycle MAL avec lessive : 5

Cotation mécanique :
- produit tel que : 0
- produit après un cycle MAL sans lessive : 5
- produit après un cycle MAL avec lessive : 5.

On n'observe aucune persistance du traitement. Le biocide (azaconazole) est très rapidement éliminé au contact de grandes quantités d'eau.

### EXEMPLE 3

(Invention : toile-éponge)

On réalise une toile-éponge de la manière décrite à l'exemple 1, en saupoudrant, à la surface de la grille, 2 % en poids (par rapport au poids de cellulose sèche) de microparticules : azaconazole/stéaramide (50/50 : % en poids), soit 1 % en poids (par rapport au poids de cellulose sèche) d'azaconazole.

On a mesuré la quantité de biocide éliminée dans les bains de régénération et de rinçage : 5 %.

Il reste donc 95 % du biocide initialement introduit dans la toile-éponge. Ladite toile présente les caractéristiques suivantes :
* Epaisseur : 6 mm
* Grammage (exprimé par rapport au poids de cellulose sèche) : 290 g/m².

Afin de simuler une utilisation ménagère, des échantillons de toile-éponge fabriqués selon le mode opératoire décrit ci-dessus sont soumis à un nombre variable de cycles machine à laver (modèle du commerce) (MAL) en l'absence de produits détergents.

Ils sont ensuite soumis au test décrit ci-dessus.

On obtient les résultats suivants.
Cotation visuelle :
- produit tel que : 3
- produit après un cycle MAL sans lessive : 2
- produit après cinq cycles MAL sans lessive : 3.

Cotation mécanique :
- produit tel que : 1-2
- produit après un cycle MAL sans lessive : 1
- produit après cinq cycles MAL sans lessive : 1-2.

Selon l'invention, on a réduit les pertes de biocide dans les dernières étapes du procédé de fabrication de la toile-éponge (régénération-rinçage) et on observe une action efficace prolongée dudit biocide.

### EXEMPLE 4

(Invention : toile-éponge)

On réalise une toile-éponge de la manière décrite à l'exemple 1, en saupoudrant, à la surface de la grille, 2 % en poids (par rapport au poids de cellulose sèche) de microparticules : azaconazole/cire PETROLITE® PE 1040-MONTANOX 85 (50/50 : % en poids), soit 1 % en poids (par rapport au poids de cellulose sèche) d'azaconazole.

Le produit obtenu présente les caractéristiques suivantes :
* Epaisseur : 6 mm
* Grammage (exprimé par rapport au poids de cellulose sèche) : 290 g/m².

Afin de simuler une utilisation ménagère, des échantillons de toile-éponge fabriqués selon le mode opératoire décrit ci-dessus sont soumis à un nombre variable de cycles machine à laver (modèle du commerce) (MAL) en l'absence de produits détergents.

Ils sont ensuite soumis au test décrit ci-dessus. On obtient les résultats suivants.
Cotation visuelle :
- produit tel que : 2-3
- produit après un cycle MAL sans lessive : 2-3
- produit après cinq cycles MAL sans lessive : 3.

Cotation mécanique :
- produit tel que : 1
- produit après un cycle MAL sans lessive : 1
- produit après cinq cycles MAL sans lessive : 1-2.

Lesdits échantillons sont particulièrement résistants.

### EXEMPLE 5

(Invention : toile-éponge)

On réalise une toile-éponge de la manière décrite à l'exemple 1, en saupoudrant, à la surface de la grille, 2 % en poids (par rapport au poids de cellulose sèche) de microparticules : carbendazim/stéaramide (50/50 : % en poids) ; soit 1 % en poids (par rapport au poids de cellulose sèche) de carbendazim.

Le produit obtenu présente les caractéristiques suivantes :
* Epaisseur : 6 mm
* Grammage (exprimé par rapport au poids de cellulose sèche) : 290 g/m².

Afin de simuler une utilisation ménagère, des échantillons de toile-éponge fabriqués selon le mode opératoire décrit ci-dessus sont soumis à un nombre variable de cycles machine à laver (modèle du commerce) (MAL) en l'absence de produits détergents.

Ils sont ensuite soumis au test décrit ci-dessus. On obtient les résultats suivants.
Cotation visuelle :
- produit tel que : 5
- produit après un cycle MAL sans lessive : 2
- produit après cinq cycles MAL sans lessive : 2-3.

Cotation mécanique :
- produit tel que : 5
- produit après un cycle MAL sans lessive : 1
- produit après cinq cycles MAL sans lessive : 2.

Ce système ne présente une bonne activité qu'après un lavage, qui permet de solubiliser une partie du principe actif.

### EXEMPLE 6

(Témoin (éponge) sans biocide)

On réalise une éponge selon le procédé classique (procédé viscose). Un mélange de viscose fibrée et de cristaux de sulfate de sodium est moulé, et le produit ainsi obtenu est régénéré dans un bain basique (mélange de sulfate de sodium et de soude), démoulé, puis rincé de façon abondante.

Le produit obtenu présente les caractéristiques suivantes :
* Section (à l'état sec) : 80-60 mm.
* Densité (rapport du poids de l'éponge séchée au volume de l'éponge humide après centrifugation à 3 000 tr/min durant 2 min) : 0,03.

Ce produit est soumis au test décrit ci-dessus. On observe, après trois semaines, une destruction totale des échantillons.

### EXEMPLE 7

(Invention : éponge)

On réalise une éponge de la manière décrite à l'exemple 6, en mélangeant 6,66 % en poids (par rapport au poids de cellulose sèche) de microparticules : carbendazim/cire Polywax® 2000 (30/70 : % en poids) ; soit 2 % en poids (par rapport au poids de cellulose sèche) de carbendazim.

Le produit obtenu présente les caractéristiques suivantes :
* Section (à l'état sec) : 80-60 mm.
* Densité (rapport du poids de l'éponge séchée au volume de l'éponge humide après centrifugation à 3 000 tr/min durant 2 min) : 0,03.

Des échantillons de ce produit sont soumis au test décrit ci-dessus. On obtient les résultats suivants :
Cotation visuelle :
- produit tel que : 2-3.
- produit après un cycle MAL sans lessive : 2.

Cotation mécanique :
- produit tel que : 1-2.
- produit après un cycle MAL sans lessive : 2.

Le produit de l'invention est bien protégé. La présente invention a été décrite en référence au problème technique de l'incorporation de biocide(s) au sein de matériaux alvéolaires cellulosiques, pour la libération programmée du(des)dit(s) biocide(s) au sein desdits matériaux. On comprendra aisément que l'incorporation à des fins analogues d'un autre principe actif fait partie du cadre de la présente invention.

Ladite invention concerne donc un matériau alvéolaire cellulosique qui renferme dans son réseau de cellulose des microparticules de type matriciel ; lesdites microparticules renfermant un principe actif et le libérant de façon contrôlée.

## Revendications

1. Matériau alvéolaire cellulosique du type éponge ou toile-éponge, contenant, pour éviter la prolifération bactérienne et/ou fongique en son sein, un agent biocide, caractérisé en ce que des microparticules de type matriciel renfermant au moins un agent biocide sont réparties dans son réseau de cellulose et y assurent, en présence d'humidité ou d'eau, une libération contrôlée du(des)dit(s) agent(s) biocide(s).

2. Matériau alvéolaire cellulosique selon la revendication 1, caractérisé en ce que lesdites microparticules se présentent sous la forme de sphères, dont le diamètre est compris entre 0,05 et 2 mm, de préférence entre 0,1 et 1 mm ou sous la forme d'écailles.

3. Matériau alvéolaire cellulosique selon l'une des revendications 1 ou 2, caractérisé en ce qu'il contient de 0,1 à 10 % en poids avantageusement de 0,5 à 2 % en poids, par rapport au poids de cellulose sèche, desdites microparticules.

4. Matériau alvéolaire cellulosique selon l'une quelconque des revendications 1 à 3, caractérisé en ce que lesdites microparticules renferment :
- du 2-(1,3-thiazol-4-yl)benzimidazole, ou
- du méthylbenzimidazol-2-yl carbamate, ou
- du 2,2'-dihydroxy-5,5'-dichlorodiphénylméthane, ou
- du 2,4,4'-trichloro-2'-hydroxybiphényléther, ou
- du 1-[[2-(2,4-dichlorophényl)-1,3-dioxolan-2-yl]méthyl]-1H-1,2,4-triazole, ou
- un mélange de ces composés biocides, dans une matrice à base d'un ou plusieurs constituant(s) hydrophobe(s) fusible(s) à une température supérieure à 100°C, choisis parmi :
- les cires microcristallines ;
- les hydrocarbures saturés à chaîne linéaire, de poids moléculaire compris entre 500 et 3 000 ;
- les cires de polyéthylène, de poids moléculaire compris entre 500 et 3000 ;
- les amides d'acides gras à chaîne linéaire et notamment le stéaramide ;
- l'éthylène bistéaramide ; et
- leurs mélanges.

5. Matériau alvéolaire cellulosique selon l'une quelconque des revendications 1 à 4, caractérisé en ce que lesdites microparticules renferment de 5 à 70 %, avantageusement de 15 à 50 % en poids, d'agent(s) biocide(s).

6. Procédé pour la préparation d'un matériau alvéolaire cellulosique selon l'une quelconque des revendications précédentes, comprenant :
- la préparation d'une masse pâteuse à partir notamment d'une solution cellulosique, telle que de la viscose, de matières fibreuses, de pigments et d'agents porophores ;
- la mise en forme de cette masse par notamment moulage, enduction de part et d'autre ou d'un seul côté d'une grille ou dépôt sur une bande porteuse ;
- le chauffage de celle-ci éventuellement dans un milieu adéquat pour que s'exerce l'action desdits agents porophores et que soit régénérée la cellulose ;
ledit procédé étant caractérisé en ce que des microparticules de type matriciel renfermant au moins un agent biocide et assurant, en présence d'humidité ou d'eau, une libération contrôlée du(des)dit(s) agent(s) biocide(s), sont introduites dans ladite masse pâteuse avant son chauffage.

7. Procédé selon la revendication 6, caractérisé en ce que lesdites microparticules sont introduites dans la masse pâteuse avant sa mise en forme.

8. Procédé selon la revendication 6, caractérisé en ce que ladite masse pâteuse est mise en forme à l'aide d'une grille et en ce que lesdites microparticules sont introduites au niveau de ladite grille.
